# EUROPÄISCHE PATENTANMELDUNG

(11) **EP 2 949 784 A1**
(43) Veröffentlichungstag der Anmeldung: **02.12.2015**
(21) Anmeldenummer: 15169106.0
(22) Anmeldetag: 26.05.2015
(51) Int. Cl.: C25B 11/03, C25B 1/46, H01M 4/88

(54) **SAUERSTOFFVERZEHRELEKTRODE UND VERFAHREN ZU IHRER HERSTELLUNG**

(30) Priorität: 27.05.2014 DE 102014210054
(71) Anmelder: Covestro Deutschland AG, 51373 Leverkusen (DE)
(72) Erfinder: Bulan, Andreas, 40764 Langenfeld (DE); Heckroth, Heike, 51519 Odenthal (DE); Jörissen, Jakob, 44227 Dortmund (DE); Frania, Philipp, 44869 Bochum (DE); Heyl, Anna, 44265 Dortmund (DE); Stelter, Michael, 09600 Wegefarth (DE)
(74) Vertreter: BIP Patents

(57) **Zusammenfassung**

Es wird ein Sauerstoffverzehrelektrode, insbesondere für den Einsatz in der Chloralkali-Elektrolyse, mit einer neuartigen Katalysatorbeschichtung sowie eine Elektrolysevorrichtung beschrieben. Es wird ferner ein Herstellungsverfahren für die Sauerstoffverzehrelektrode sowie ihre Verwendung in der Chloralkali-Elektrolyse oder Brennstoffzellentechnik beschrieben. Die Sauerstoffverzehrelektrode umfasst wenigstens Stromkollektor und eine Gasdiffusionsschicht mit einer katalytisch aktiven Komponente, wobei die Gasdiffusionsschicht als mindestens eine poröse Folie eines fluorierten Polymeren ausgebildet ist, in die als katalytisch aktive Komponente feinkristalline metallische Katalysatorpartikel eingebracht und über eine erste metallische Zwischenschicht mit dem Stromkollektor elektrisch leitend verbunden sind

## Beschreibung

Die Erfindung betrifft eine Sauerstoffverzehrelektrode, insbesondere für den Einsatz in der Chloralkali-Elektrolyse, mit einer neuartigen Katalysatorbeschichtung auf Basis von Kristallnadeln eines Katalysatormetalls sowie eine Elektrolysevorrichtung. Die Erfindung betrifft ferner ein Herstellungsverfahren für die Sauerstoffverzehrelektrode sowie ihre Verwendung in der Chloralkali-Elektrolyse oder Brennstoffzellentechnik.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht mit einer katalytisch aktiven Komponente umfassen.

Sauerstoffverzehrelektroden stellen eine Form von Gasdiffusionselektroden dar. Gasdiffusionselektroden sind Elektroden, in denen die drei Aggregatzustände - fest, flüssig und gasförmig - miteinander in Kontakt stehen und der feste, Elektronen leitende Katalysator eine elektrochemische Reaktion zwischen der flüssigen und der gasförmigen Phase katalysiert. Der feste Katalysator ist dabei üblicherweise zu einer porösen Folie mit einer Dicke in der Größenordnung von etwa 200 µm verpresst.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzen. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im Folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.-% und gegenüber reinem Sauerstoff bei einer Temperatur von typischerweise 80 - 90°C. Ebenso wird ein hohes Maß an mechanischer Stabilität gefordert, so dass die Elektroden in Elektrolyseuren einer Größe von üblicherweise mehr als 2 m² Fläche (technische Größe) eingebaut und betrieben werden können. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas- und Flüssigkeitsraum voneinander getrennt bleiben. Die Langzeitstabilität und geringe Herstellkosten sind weitere besondere Anforderungen an eine technisch nutzbare Sauerstoffverzehrelektrode.

Eine weitere Entwicklungsrichtung zur Nutzung der SVE-Technologie in der Chlor-Alkali-Elektrolyse ist es, die Ionenaustauschermembran, die in der Elektrolysezelle den Anoden- vom Kathodenraum trennt, ohne Natronlaugespalt, d.h. einen spaltförmigen Zwischenraum, der von Natronlauge durchströmt wird, direkt auf die SVE aufzulegen. Diese Anordnung wird auch als zero gap Anordnung im Stand der Technik bezeichnet. Diese Anordnung wird üblicherweise auch in der Brennstoffzellen-Technologie angewandt. Nachteilig hierbei ist, dass die sich bildende Natronlauge durch die SVE zur Gasseite der SVE geleitet werden muss und anschließend an der SVE nach unten fließt. Hierbei darf es nicht zu einer Verstopfung der Poren in der SVE durch die Natronlauge oder zur Auskristallisation von Natronlauge in den Poren kommen. Es hat sich herausgestellt, dass bei dieser Elektrodenanordnung auch sehr hohe Natronlauge-Konzentrationen entstehen können, wobei die bekannten Ionenaustauschermembranen gegen diese hohen Konzentrationen nicht langzeitstabil sind (Lipp et al, J. Appl. Electrochem. 35 (2005)1015 - Los Alamos National Laboratory "Peroxide formation during chlor-alkali electrolysis with carbon-based ODC").

Nach dem speziellen Stand der Technik besitzen SVE eine Porenstruktur, in der durch den Einsatz eines fein verteilten hydrophoben Porensystems, meistens gebildet auf der Basis von Fluorpolymeren, insbesondere PTFE (Polytetrafluorethylen, z.B. Teflon®) alle Orte innerhalb der SVE für das auf der Kathodenseite eingesetzte Gas gut zugänglich sind. Andererseits muss auch der hydrophile, von einem Elektrolytfilm bedeckte Katalysator ausreichend fein verteilt sein, damit eine möglichst hohe Oberfläche für die elektrochemische Reaktion vorhanden ist, die eine niedrige Zellspannung ermöglicht. Bei den üblichen Fertigungsverfahren, insbesondere dem Trocken- oder Nassherstellungsverfahren, werden PTFE- und Katalysatorpartikel zur Herstellung der SVE eingesetzt. Die Mischung und Weiterverarbeitung dieser Partikel führt im Laufe des Fertigungsverfahren immer zu Bereichen, in denen größere, vom Elektrolyt geflutete Agglomerate von Katalysator-Partikeln - die keine Gasporen enthalten - vorkommen. Der Katalysator im Inneren solcher Agglomerate ist nahezu unwirksam, da die Gasmoleküle nicht in ausreichender Menge zu diesem Katalysator diffundieren. Somit bleibt ein großer Teil des Katalysatormaterials ungenutzt. Nach Pinnow et al.("Thin-film flooded agglomerate model for silver-based oxygen depolarized cathodes", J. Appl. Electrochem. 41 (2011) 1053-1064) bleiben etwa 90% des eingesetzten Katalysators ungenutzt.

Bidault et al. (2010, Journal of Power Sources, "A novel cathode for alkaline fuel cells based on a porous silver membrane", 195, pp. 2549-2556) haben eine Gasdiffusionskathode auf der Basis einer porösen Silbermembran beschrieben. Ziel der Entwicklung war, eine hohe Oberfläche des Katalysators durch den Einsatz von feinporigem Silber zu erreichen. Hierbei zeigte sich, dass eine Beschichtung der Silberporen mit PTFE notwendig war, um ein vollständiges Fluten der Poren durch den Elektrolyten zu verhindern, da die Poren sonst nicht mehr für das Reaktionsgas zugänglich sind. Nachteil dieser Art der Gasdiffusionskathode ist, dass man die Poren der Silbermembran nicht beliebig klein wählen und damit die Oberfläche nicht stark erhöhen kann, da die PTFE-Beschichtung nicht mehr in die Poren eindringen kann. Weiterhin verringert eine zu starke Beschichtung der Poren wiederum die für die elektrokatalytische Reaktion verfügbare Silberoberfläche.

Einen anderen Weg nutzt das Verfahren zur Herstellung von Sauerstoffverzehrelektroden in EP 2 573 212 A2. Hier dient als Basis eine poröse Folie eines fluorierten Polymers, z.B. expandiertes PTFE, die auf Grund ihrer hydrophoben Eigenschaften das Eindringen von Elektrolyt verhindert und den ungehinderten Zutritt des Gases ermöglicht. Die katalytisch aktive Komponente wird durch galvanische Abscheidung eingebracht. Im optimalen Fall wachsen feine Kristallnadeln bei der Abscheidung entlang des elektrischen Feldes ausgehend vom Stromkollektor senkrecht in die PTFE-Folie hinein. Im Betrieb als Gasdiffusionselektrode werden diese feinen Katalysatorstrukturen dünn mit Elektrolyt benetzt, während das PTFE die Gasversorgung sicherstellt. Der Idealfall wäre erreicht, wenn die Katalysatorstrukturen einerseits so weit von einander entfernt sind, dass die Bildung von Agglomeraten unmöglich und die gesamte Katalysatoroberfläche für das Gas zugänglich ist, so dass der Katalysator voll genutzt werden kann. Andererseits soll eine große Katalysatoroberfläche aufgebaut werden, damit eine hohe Leistung der Sauerstoffverzehrelektrode erreicht werden kann, aber gleichzeitig die lokale Stromdichte und somit die Überspannung an der Elektrode gering bleibt.

Typische Ausgangsmaterialien nach EP 2 573 212 A2 sind eine poröse Folie aus PTFE und ein Stromkollektor, z. B. ein gewebtes Metallnetz. Die Komponenten werden mit einer Metallsalzlösung geflutet und mechanisch zusammengepresst. Aus ruhender Lösung wird dann das Katalysatormetall, z.B. Silberkristallnadeln, galvanisch mit konstant fließendem Gleichstrom abgeschieden. Bei der praktischen Anwendung des Fertigungsverfahrens hat sich herausgestellt, dass die gebildeten Silberstrukturen in der porösen Folie auf dem Stromkollektornetz nur unbefriedigend haften und der ohmsche Spannungsabfall in der hergestellten SVE zu groß ist. Die Silberlösung muss verhältnismäßig hoch konzentriert sein, um genug Silberionen für die galvanische Abscheidung in der PTFE-Folie zur Verfügung zu stellen. Dies führt zu groben, katalytisch relativ inaktiven Katalysatorpartikeln. In der unbewegten Lösung können sowohl die joulesche Wärme als auch Gase, die bei der Galvanisierung durch Nebenreaktionen entstehen und den Herstellungsvorgang durch Verdrängung der Silberlösung in der hydrophoben porösen Folie blockieren können, schlecht abgeführt werden.

Eine an sich bekannte Variante in der Galvanotechnik ist der Einsatz von gepulstem Gleichstrom. Taylor et al. beschreiben in US006080504A ein Verfahren zur Abscheidung einer elektrokatalytisch aktiven Komponente durch Pulsabscheidung, hier insbesondere von Platinpartikeln auf einer kohlenstoftbasierten, hydrophilen Matrix zur Herstellung von Gasdiffusionselektroden für Brennstoffzellen. Eine unmittelbare Anwendung dieses Verfahrens zur Herstellung einer SVE für die Chlor-Alkali-Elektrolyse ist aufgrund mangelnder Beständigkeit von kohlenstoftbasierten Materialen in diesem Anwendungsfall nicht möglich.

Zur Abscheidung von Silberstrukturen mit hoher Flächenbelegung und großer Oberfläche kommen Silbernitratlösungen mit Zusatz von Phosphorsäure zum Einsatz (Popov et. al.: "Electrodeposition of silver from nitrate solution: Part II. Mechanism of the effect of phosphate ions", J. Appl. Electrochem, 28, (1998), 797-801). Diese Strukturen weisen ein hohes Oberflächen/VolumenVerhältnis auf. Die Ergebnisse sind nicht unmittelbar auf die Herstellung einer SVE nach EP 2 573 212 A2 übertragbar, da die Abscheidung nicht in einer hydrophoben Grundstruktur untersucht worden ist.

Die Aufgabe der vorliegenden Erfindung besteht darin, ein Herstellungsverfahren für die Sauerstoffverzehrelektroden mit galvanotechnisch abgeschiedenem Metallkatalysator, insbesondere für den Einsatz in der Chlor-Alkali-Elektrolyse, bereitzustellen, das dabei aber die oben genannten Nachteile bekannter Herstellungsverfahren und SVE überwindet, eine verbesserte Katalysatorausnutzung sicherstellt und den Aufwand an Grundmaterialien reduziert.

Die Aufgabe wird erfindungsgemäß gelöst, durch ein Herstellungsverfahren, bei dem während der Galvanisierungsvorgänge ein konstanter Flüssigkeitsstrom der Metallsalzlösung durch die Kombination aus Stromkollektor und poröser PTFE-Folie geleitet wird.

Die poröse PTFE-Folie wird dadurch gleichmäßig auf die Stromkollektorstruktur gepresst. Dadurch lassen sich problemlos auch mehrere Schichten der porösen Folie aufeinandergelegt verwenden.

Gegenstand der Erfindung ist ein Verfahren zur Herstellung einer Sauerstoffverzehrelektrode, wenigstens umfassend einen Stromkollektor und eine Gasdiffusionsschicht mit einer katalytisch aktiven Komponente, dadurch gekennzeichnet, dass die Gasdiffusionsschicht als mindestens eine poröse Folie eines fluorierten Polymeren, insbesondere als mindestens eine poröse Polytetrafluorethylen (PTFE)-Folie ausgebildet ist, in die als katalytisch aktive Komponente feinkristalline metallische Katalysatorpartikel eingebracht und über eine erste metallische Zwischenschicht mit dem Stromkollektor elektrisch leitend verbunden sind,
wobei das Verfahren mindestens die folgenden Schritte aufweist:
A) Bereitstellen einer Folie eines fluorierten Polymeren und eines Stromkollektors in Form eines für Gase und Flüssigkeiten durchlässigen, elektrisch leitenden, flächigen Gebildes, in Kontaktbringen der Folie mit dem Stromkollektor und gegebenenfalls Verbinden der Folie mit dem Stromkollektor durch Verpressen,
B) Tränken der Folie des fluorierten Polymeren, insbesondere der porösen PTFE-Folie mit einem leicht flüchtigen, organischen Lösungsmittel, bevorzugt einem C₁- bis C₆-Alkohol, besonders bevorzugt mit Isopropylalkohol, und anschließende Verdrängung des Lösungsmittels durch Wasser,
C) gegebenenfalls nachträgliches Verbinden des Stromkollektors in die Folie aus Schritt A) durch Verpressen, insbesondere in eine Tiefe, die mindestens bis zur Hälfte und höchstens bis zu 2/3 der Dicke der porösen Folie reicht,
D) Verdrängung des Wassers in der porösen Folie durch eine wässrige Metallsalzlösung zur galvanischen Abscheidung einer metallischen Zwischenschicht auf dem Stromkollektor, insbesondere in einem Galvanikbad, auch gegebenenfalls in Anwesenheit von Glanzbildnern als Zusatz in der Metallsalzlösung, insbesondere Thioharnstoff, Saccharin als Glanzbildner,
E) galvanische Abscheidung einer ersten metallischen Zwischenschicht auf dem Stromkollektor zur mechanischen Verbindung von Stromkollektor und PTFE-Folie nach Schritt A),
F) Verdrängung der wässrigen Metallsalzlösung aus Schritt E) in der Folie durch Wasser,
G) anschließend Verdrängung des Wassers in der Folie durch eine wässrige Metallsalzlösung zur galvanischen Abscheidung feinkristalliner Metalle, insbesondere in einem Galvanikbad, auch gegebenenfalls in Anwesenheit von Zusätzen wie Glanzbildnern, insbesondere von Thioharnstoff und/oder Saccharin,
H) galvanische Abscheidung feinkristalliner metallischer Katalysatorpartikel aus der Metallsalzlösung gemäß Schritt G) durch einen Galvanikprozess, in dem der Stromkollektor als Kathode (3) dient und wobei die feinkristallinen metallischen Katalysatorpartikel auf der in Schritt E) gebildeten ersten Zwischenschicht auf dem Stromkollektor aufwachsen,
I) Spülen der in H) entstandenen Sauerstoffverzehrelektrode mit Wasser und gegebenenfalls mit einem C₁- bis C₆-Alkohol und gegebenenfalls anschließendes Trocknen der Sauerstoffverzehrelektrode.

In einer bevorzugten Ausführung des neuen Verfahrens werden die Prozessschritte: B), D, E), F), G), H) und I) unabhängig voneinander so durchgeführt, dass die jeweilig in diesen Prozessschritten verwendeten Prozessflüssigkeiten: Lösungsmittel, Wasser und die verschiedenen Metallsalzlösungen die Folie und den Stromkollektors von der Seite der Folie in Richtung des Stromkollektors zwangsweise durchströmen.

In Folge der bevorzugt kontinuierlichen Durchströmung werden immer neue Metallionen in die Abscheidungszone transportiert, so dass geringer konzentrierte Lösungen verwendbar sind, wodurch im Bereich der Grenzstromdichte gearbeitet werden kann und somit fein verteilte und damit katalytisch aktivere Metallstrukturen erzeugt werden können. Falls unter diesen Bedingungen Gas entsteht, wird es durch die Strömung entfernt, bevor es sich in der hydrophoben porösen Folie festsetzen kann. Ebenso wird die während des elektrischen Stromflusses entstehende joulesche Wärme durch die Flüssigkeitsströmung abgeführt und eine Überhitzung, die zur Unterbrechung des Herstellungsprozesses durch Wasserdampfblasen führen kann, wird vermieden.

Des Weiteren weist das erfindungsgemäße verbesserte Herstellungsverfahren den Vorteil auf, dass eine festere Verbindung von Stromkollektor und PTFE-Folie durch eine erste kompakte metallische Zwischenschicht, die sich durch kurzfristige Abscheidung aus einer geeigneten Metallsalzlösung bildet, erreicht wird. Diese zusätzliche Abscheidung wird vor der Abscheidung der katalytisch aktiven Metallstrukturen durchgeführt. Dadurch wird eine dünne, zusammenhängende und fest haftende Metallschicht auf der Stromkollektorstruktur und in der untersten Schicht der porösen Folie erzeugt, die eine gute Grundlage zur folgenden galvanischen Abscheidung der katalytisch wirksamen Metallstrukturen bietet.

In einem besonders bevorzugten Verfahren wird als Metallsalzlösung in Schritt E) eine cyanidische Silbersalzlösung verwendet.

Eine bevorzugte Variante des neuen Verfahrens ist dadurch gekennzeichnet, dass die galvanische Abscheidung der Katalysatorpartikel in Schritt E) mittels gepulstem Strom erfolgt, wobei der Abscheidestrom 1 bis 30 A pro10 cm² Elektrodenfläche, bevorzugt 5 bis 15 A pro 10 cm² Elektrodenfläche beträgt und die Pulsdauer im Bereich von 10 bis 3000 ms, bevorzugt von 500 bis 1500 ms beträgt.

Eine weitere bevorzugte Variante des neuen Verfahrens ist dadurch gekennzeichnet, dass die Abscheidung der Metallpartikel gemäß Schritt H) mittels gepulstem Strom erfolgt, wobei der Abscheidestrom 1 bis 30 A pro 10 cm² Elektrodenfläche, bevorzugt 5 bis 15 A pro 10 cm² Elektrodenfläche beträgt und die Pulsdauer im Bereich von 10 bis 3000 ms, bevorzugt von 500 bis 1500 ms beträgt.

Überraschend hat sich gezeigt, dass durch die Anwendung von gepulstem Gleichstrom bei der Abscheidung der katalytisch aktiven Metallstrukturen eine wesentliche Aktivitätssteigerung der hergestellten SVE erreicht werden konnte.

In einem bevorzugten Verfahren weisen die feinkristallinen metallischen Katalysatorpartikel nach Schritt H) einen mittleren Durchmesser im Bereich von 0,05 µm bis 5 µm und eine mittlere Länge im Bereich von 10 µm bis 700 µm auf.

Das elektrisch leitende, flächige Gebilde ist in einer weiteren bevorzugten Ausführung der Erfindung als metallisches Netz, Vlies, Schaum, Gewebe, Geflecht, Gewirk oder Streckmetall ausgebildet.

Eine weitere bevorzugte Variante des neuen Verfahrens ist dadurch gekennzeichnet, dass die Metallsalzlösung gemäß Schritt D) eine Salzlösung auf Basis von mindestens einem Metallsalz aus der Reihe: Silbersalz, bevorzugt Silber-Nitrat, Silber-Methansulfonat, Kalium-Silber-Cyanid, Kalium-Silber-Thiosulfat, Silber-Lactat, oder Platinsalz, insbesondere Pt(NO₃)₂ oder H₂PtCl₆ ist.

In einer anderen bevorzugten Ausführung des neuen Verfahrens ist die Metallsalzlösung gemäß Schritt G) eine Salzlösung auf Basis von mindestens einem Metallsalz aus der Reihe: Silbersalz, bevorzugt Silber-Nitrat, Silber-Methansulfonat, Kalium-Silber-Cyanid, Kalium-Silber-Thiosulfat, Silber-Lactat, oder Platinsalz, insbesondere Pt(NO₃)₂ oder H₂PtCl₆.

In einer besonders bevorzugten Ausführung der vorstehenden Variante enthält die Metallsalzlösung eine saure Lösung mit einem pH Wert im Bereich von 1 bis 2 ist, und bevorzugt Phosphorsäure und/oder Salpetersäure.

Eine weitere besonders bevorzugte Variante des neuen Herstellungsverfahrens ist dadurch gekennzeichnet, dass als Stromkollektor ein auf der PTFE-Folie galvanisch abgeschiedenes Metallnetz dient. Die galvanische Abscheidung erfolgt dann aus einer Metallsalzlösung, die zur Abscheidung kompakter Schichten geeignet ist. Als kathodischer Träger wird eine Metallstruktur verwendet, auf der die abgeschiedene Metallschicht nicht haftet. Nach Abschluss des Herstellungsverfahrens kann die SVE dann von der Trägerstruktur unbeschädigt abgezogen werden. Trotz der geringen Dicke des galvanisch abgeschiedenen Stromkollektors, durch die der Materialeinsatz minimiert wird, kann ein geringer ohmscher Spannungsabfall in der SVE erreicht werden.

Weiterer Gegenstand der Erfindung ist eine Sauerstoffverzehrelektrode, wenigstens umfassend einen Stromkollektor und eine Gasdiffusionsschicht mit einer katalytisch aktiven Komponente, dadurch gekennzeichnet, dass die Gasdiffusionsschicht als poröse Folie eines fluorierten Polymeren, insbesondere als eine poröse Polytetrafluorethylen (PTFE)-Folie ausgebildet ist, in die als katalytisch aktive Komponente feinkristalline metallische Katalysatorpartikel, insbesondere mit einem mittleren Durchmesser im Bereich von 0,05 µm bis 5 µm und einer mittleren Länge im Bereich von 10 µm bis 700 µm, eingebracht sind dadurch gekennzeichnet, dass die feinkristallinen metallischen Katalysatorpartikel über eine erste metallische Zwischenschicht mit dem Stromkollektor elektrisch leitend verbunden sind.

In einer bevorzugten Ausführung der Sauerstoffverzehrelektrode ist die erste metallische Zwischenschicht eine Silberschicht.

Ferner ist Gegenstand der Erfindung eine neue Sauerstoffverzehrelektrode erhalten aus dem vorstehend genannten erfindungsgemäßen Verfahren.

Die Sauerstoffverzehrkathode kann zusätzlich einen Träger aufweisen. Als Träger eignen sich insbesondere alle grundsätzlich bekannten leitfähigen Materialien, die von Gas und Flüssigkeit durchströmt werden können.

Als Material für den Träger kommen bevorzugt flachgewalzte Metallnetze in Frage.

Besonders bevorzugt werden flachgewalzte Nickel- und Silbernetze verwendet.

Die neue Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid.

Alternativ kann die Sauerstoffverzehrelektrode bevorzugt als Kathode in einer Brennstoffzelle geschaltet werden. Bevorzugte Beispiele sind alkalische Brennstoffzellen oder die Anwendung in einer Metall-Luft-Batterie.

Weiterer Gegenstand der Erfindung ist daher die Verwendung der neuen Sauerstoffverzehrelektrode zur Reduktion von Sauerstoff in Gegenwart von alkalischen Elektrolyten, z. B. von Natronlauge, insbesondere in der alkalischen Brennstoffzelle, die Verwendung bei der Trinkwasseraufbereitung, beispielsweise zur Herstellung von Natriumhypochlorit als Bleichlösung oder die Verwendung in der Chlor-Alkalielektrolyse, insbesondere zur Elektrolyse von LiCl, KCl oder NaCl.

Die neue SVE wird besonders bevorzugt bei der Chlor-Alkali-Elektrolyse und hier insbesondere bei der Natriumchlorid-(NaCl)-Elektrolyse eingesetzt.

Gegenstand der Erfindung ist auch eine Elektrolysevorrichtung, insbesondere für die Chloralkalielektrolyse, aufweisend eine neue erfindungsgemäße Sauerstoffverzehrelektrode als Sauerstoff verzehrende Kathode.

Die Erfindung wird nachfolgend anhand der Figuren durch die Beispiele, welche jedoch keine Beschränkung der Erfindung darstellen, näher erläutert.

Es zeigen:
- Fig. 1: eine Explosionszeichnung einer Versuchsanordnung zur Durchführung des erfindungsgemäßen Verfahrens
- Fig. 2: ein Detail aus Fig. 1 im Querschnitt und im Betriebszustand des Verfahrens
- Fig. 3: einen Querschnitt durch das mit Lack beschichtete Titannetz zur Abscheidung eines Silbernetzes als Stromkollektor zur Durchführung einer bevorzugten Ausführung des neuen Verfahrens

In den Figuren haben die Bezugszeichen die nachstehende Bedeutung:
- 1: Kabeldurchführung zur Anode
- 2: Anodenhalter, Durchmesser unten: 36 mm
- 3: Mantel, Innendurchmesser der Aufnahme für Anodenhalter: 38 mm
- 4: Boden
- 5: Außengewinde passend zu 7
- 6: Silberanode
- 7: Innengewinde passend zu 5
- 8: Anschluss für Druckaufnehmer
- 9: Elektrolytzufluss mit Temperaturfühler
- 10: poröse PTFE Membran
- 11: Stromkollektor
- 12: Auflage für Stromkollektor
- 13: Glasfritte
- 14: Zwischenschicht
- 15: Elektrolytablauf mit Temperaturfühler
- 16: Silbernadeln
- 17: Elektrolytstrom durch die Zelle
- 18:: Verschraubungen zur Montage
- 19:: Lack
- 20:: Titannetz
- 21:: Auf dem Titannetz abgeschiedenes Silbernetz

### Beispiele

### Beispiel 1

Ausgangsmaterialien sind ein bis zur Ebenheit flachgewalztes Nickel-Kontaktnetz als Stromkollektor 1(Maschenweite 500 µm, Drahtstärke 150 µm; Dicke nach dem Walzen 120µm) und 4 Lagen einer dreidimensional expandierten PTFE-Membran 10 mit einer Stärke von 70 µm und 85 - 90 % Porosität.

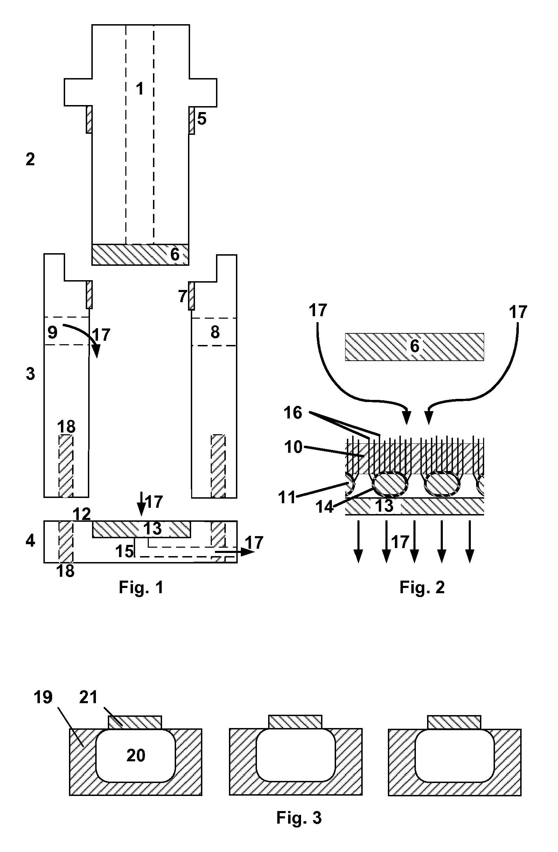

Das Nickelnetz 1 wird zunächst für eine Minute in 25 Gew.-% Schwefelsäure aktiviert und dann mit Wasser abgespült. Anschließend wird es zwischen den Boden 4 und den Mantel 3 der in Fig. 1 gezeigten Fertigungseinrichtung (2, 3, 4) mit einer geometrischen Elektrodenfläche von 10 cm² (36 mm Durchmesser) als Teil ohne die Glasfritte 13 eingespannt und dabei durch jeweils 1mm dicke Silikon-Flachdichtungen (nicht gezeichnet) oberhalb und unterhalb des Netzes abgedichtet. Eine cyanidische Silberlösung (36 g/L AgCN, 60 g/L KCN, 45 g/L K₂CO₃ wird eingefüllt bis die Silberanode 6 am Anodenhalter 2 in die Lösung eintaucht. Die Zu- und Abläufe werden verschlossen. Die kathodische Kontaktierung des Netzes 1 erfolgt mittels vierer stramm schließender Krokodilklemmen (nicht gezeichnet) an den über den Rand der Fertigungseinrichtung hinausragenden Netzecken. Das Netz 1 wird dann bei 0,2 A für 30 s im Bereich der Elektrodenfläche allseitig versilbert. Anschließend wird die cyanidische Silberlösung entfernt, die Fertigungseinrichtung (2, 3,4) wird mit Wasser gespült, und die Teile 3 und 4 werden wieder getrennt.

In den Boden 4 der Fertigungseinrichtung wird jetzt die Glasfritte 13 eingesetzt, und auf eine 1mm dicke Silikon-Flachdichtung wird das im Bereich der Elektrodenfläche versilberte Stromkollektor-Netz 11 aufgelegt. Es verfügt dadurch im Bereich der aktiven Elektrodenfläche über eine druckfeste, glatte und flüssigkeitsdurchlässige Grundlage. Um die hydrophoben PTFE-Membranlagen 10 mit Elektrolyt 17 füllen zu können, werden sie zunächst mit Isopropylalkohol getränkt. Sie sind mit 42 mm Kantenlänge größer zugeschnitten, als die Elektrodenfläche. Nachdem sie auf dem Stromkollektor-Netz 11 aufgebracht sind, lassen sich die Teile 3 und 4 dicht verschrauben, ohne dass eine zusätzliche Dichtung notwendig ist.

Alle weiteren Schritte werden unter Durchströmung der Fertigungseinrichtung mittels einer Spritzenpumpe bei einer Durchflussrate von 50 mL/min durchgeführt (vergleiche Flusspfeile 17 in Fig. 1 und Fig. 2). Durch den Strömungswiderstand der PTFE-Membranlagen 10 ergibt sich ein Überdruck im Mantelraum 3, der mit dem Druckaufnehmer an Anschluss 8 gemessen wird. Dieser Überdruck presst die PTFE-Membranlagen 10 stark auf das Stromkollektor-Netz 11, so dass eine feste Verbindung hergestellt wird. Die Glasfritte 13 verhindert dabei ein Durchbiegen des Netzes 1. Der Anodenhalter 2 wird eingeschraubt (Elektrodenabstand 5 mm) und durch eine 1mm dicke Silikon-Fachdichtung (nicht gezeichnet) abgedichtet.

Die Fertigungseinrichtung (Fig. 1) sowie die Elektrodengrundmaterialen werden zunächst mit 50 mL Isopropylalkohol und anschließend mit 100 mL entgastem, destilliertem Wasser gespült. Bei allen Spülschritten wird die im vorherigen Schritt eingesetzte Lösung oberhalb der Membran 10 durch Absaugen so weit entfernt, dass die Membran 10 gerade noch benetzt ist. Die Membran 10 darf in keinem Schritt direkt mit Luft in Kontakt kommen. Anschließend werden unter Durchströmung mit der bereits genannten cyanidischen Silberlösung (36 g/L AgCN, 60 g/L KCN, 45 g/L K₂CO₃,) zunächst Kontaktnetz und netzseitige Membranschicht bei 0,2 A für 60 s mit einer Silber-Zwischenschicht (14) verbunden (siehe Fig. 1 und Fig. 2).

Nach Spülen mit 100 mL entgastem, destillierten Wasser erfolgt die weitere Durchströmung mit einer Silbernitrat-Lösung (0,1 M AgNO₃, 0,1M H₃PO₄)., Nach einer Wartezeit von 15 Sekunden, die eingesetzt wird, um Druck in der Fertigungszelle (Fig. 1) aufzubauen und die Membranlagen 10 sicher mit Silbernitratlösung zu durchtränken, werden Silberstrukturen durch 30 Strompulse (10 A mit 1 s Dauer, Pause zwischen den Pulsen 1 s) abgeschieden. Abschließend erfolgt ein Spülvorgang zur Durchströmung der in die Zelle eingebauten Grundmaterialien mit 100 mL entgastem destillierten Wasser.

Teilstücke der gefertigten Gasdiffusionselektroden mit 3 cm² Elektrodenfläche werden, ohne sie vorher zu trocknen, als Sauerstoffverzehrkathoden in einer Halbzelle (d.h. mit einer Sauerstoff entwickelnden Gegenelektrode) in Natronlauge (32 Gew.-% NaOH, 90°C, O₂ 100 Vol.-%) betrieben und vermessen.

Es wurde beim Betrieb als Sauerstoffverzehr-Kathode mit einer Stromdichte von 4,0 kA/m² ein Potential von - 300 mV gegen die NHE (Normal Hydrogen Electrode) erreicht. Der Silbergehalt, bestimmt durch einen sauren Aufschluss aus einem weiteren Teilstück der Elektrode mit Salpetersäure und anschließender potentiometrischer Fällungstitration, betrug etwa 190 g pro m² Elektrodenfläche.

### Beispiel 2

Die Elektroden-Fertigung erfolgt analog zu Beispiel 1. Die katalytisch aktiven Silberstrukturen werden jedoch aus einer Silbernitratlösung anderer Zusammensetzung (0,1 M AgNO₃, 0,06 M H₃PO₄, und durch einen anderen zeitlichen Verlauf des elektrischen Stroms erzeugt. Die Abscheidung erfolgt durch 25 aufeinander folgende Zyklen dieses Schemas: 5 Strompulse durch Anlegen einer Spannung von 60V (resultierender Strom etwa 25 A) bei einer Länge von 60 ms und 1s Wartezeit zwischen den Pulsen jeweils gefolgt von 1 s Abscheidung mit 10A.

Die Elektrode erreichte beim Betrieb als Sauerstoffverzehr-Kathode in der Halbzelle unter den oben beschriebenen Bedingungen mit einer Stromdichte von 4,0 kA/m² ein Potential von - 200 mV gegen die NHE. Der Silbergehalt betrug etwa 350 g pro m² Elektrodenfläche.

### Beispiel 3

Als Kontaktnetz für die Elektroden-Fertigung wird ein bis zur Ebenheit flachgewalztes Titannetz 20 (Maschenweite 500 µm, Drahtstärke 150 µm) verwendet. Dieses wird einseitig mittels Klebefolie abgeklebt und mit einem 2-Komponenten-Lötstopplack 19 (Peters SD 2444 NB-M) beschichtet. Die Folie wird abgezogen und die Maschen werden mit Druckluft von überschüssigem Lack befreit. Lackreste auf der unbeschichteten Oberfläche werden nach dem Aushärten mit feinem Schmirgelpapier wieder entfernt (siehe Fig. 3). Das Netz wird, wie in Beispiel 1 zur Netzversilberung beschrieben - also ohne die poröse PTFE-Folie -, in die Fertigungseinrichtung eingespannt. Auf der freien Oberfläche wird für 300s bei 0,5 A aus cyanidischer Silberlösung (105 g/L AgCN, 113 g/L KCN, 60 g/L K₂CO₃, 30 g/L KOH) ein Silber-Netz 21 von ca. 40 µm Dicke abgeschieden. Es soll nach Abschluss der Elektroden-Fertigung in der Sauerstoffverzehrkathode als Kontaktnetz dienen, das von dem Titannetz abgezogen werden kann, da es dort nicht fest haftet. Für die weitere Elektroden-Fertigung verbleibt es jedoch zunächst auf dem Titannetz.

Mit dem silberbeschichteten Titannetz wird der Fertigungsprozess wie in Beispiel 1 beschrieben fortgeführt. Als Elektrolyt für die katalytisch aktiven Silberstrukturen dient jedoch eine Silbernitratlösung anderer Zusammensetzung (0,1 M AgNO₃, 0,1 M H₃PO₄). Nach Abschluss der Fertigung kann die aus den PTFE-Membranlagen 10 entstandene Elektrode mit dem daran fest anhaftenden Silber-Kontaktnetz von dem Titannetz abgezogen werden.

Beim Betrieb als Sauerstoffverzehr-Kathode wurde mit einer Stromdichte von 4,0 kA/m² ein Potential von - 350 mV gegen die NHE erreicht. Der Silbergehalt betrug insgesamt etwa 400 g pro m² Elektrodenfläche.

## Patentansprüche

1. Verfahren zur Herstellung einer Sauerstoffverzehrelektrode, wenigstens umfassend einen Stromkollektor und eine Gasdiffusionsschicht mit einer katalytisch aktiven Komponente, **dadurch gekennzeichnet, dass** die Gasdiffusionsschicht als mindestens eine poröse Folie eines fluorierten Polymeren, insbesondere als eine poröse Polytetrafluorethylen (PTFE)-Folie ausgebildet ist, in die als katalytisch aktive Komponente feinkristalline metallische Katalysatorpartikel eingebracht und über eine erste metallische Zwischenschicht mit dem Stromkollektor elektrisch leitend verbunden sind.
wobei das Verfahren mindestens die folgenden Schritte aufweist:
A) Bereitstellen mindestens einer Folie eines fluorierten Polymeren und eines Stromkollektors in Form eines für Gase und Flüssigkeiten durchlässigen, elektrisch leitenden, flächigen Gebildes, in Kontaktbringen der Folie mit dem Stromkollektor und gegebenenfalls Verbinden der Folie mit dem Stromkollektor durch Verpressen,
B) Tränken der Folie des fluorierten Polymeren, insbesondere der porösen PTFE-Folie mit einem leicht flüchtigen, organischen Lösungsmittel, bevorzugt einem C₁- bis C₆-Alkohol, besonders bevorzugt mit Isopropylalkohol, und anschließende Verdrängung des Lösungsmittels durch Wasser,
C) gegebenenfalls nachträgliches Verbinden des Stromkollektors in die Folie aus Schritt A) durch Verpressen, insbesondere in eine Tiefe, die mindestens bis zur Hälfte und höchstens bis zu 2/3 der Dicke der porösen Folie reicht,
D) Verdrängung des Wassers in der porösen Folie durch eine wässrige Metallsalzlösung zur galvanischen Abscheidung einer metallischen Zwischenschicht auf dem Stromkollektor, insbesondere in einem Galvanikbad, auch gegebenenfalls in Anwesenheit von Glanzbildnern als Zusatz in der Metallsalzlösung, insbesondere Thioharnstoff, Saccharin als Glanzbildner,
E) galvanische Abscheidung einer ersten metallischen Zwischenschicht auf dem Stromkollektor zur mechanischen Verbindung von Stromkollektor und PTFE-Folie nach Schritt A),
F) Verdrängung der wässrigen Metallsalzlösung aus Schritt E) in der Folie durch Wasser,
G) Verdrängung des Wassers in der Folie durch eine wässrige Metallsalzlösung zur galvanischen Abscheidung feinkristalliner Metalle, insbesondere in einem Galvanikbad, auch gegebenenfalls in Anwesenheit von Zusätzen wie Glanzbildnern, insbesondere von Thioharnstoff und/oder Saccharin,
H) galvanische Abscheidung feinkristalliner metallischer Katalysatorpartikel aus der Metallsalzlösung gemäß Schritt G) durch einen Galvanikprozess, in dem der Stromkollektor als Kathode (3) dient und wobei die feinkristallinen metallischen Katalysatorpartikel auf der in Schritt E) gebildeten ersten Zwischenschicht auf dem Stromkollektor aufwachsen,
I) Spülen der in H) entstandenen Sauerstoffverzehrelektrode mit Wasser und gegebenenfalls mit einem C₁- bis C₆-Alkohol und gegebenenfalls anschließendes Trocknen der Sauerstoffverzehrelektrode.

2. Verfahren nach Anspruch 1, **dadurch gekennzeichnet, dass** als Metallsalzlösung in Schritt E) eine cyanidische Silbersalzlösung verwendet wird.

3. Verfahren nach Anspruch 1, **dadurch gekennzeichnet, dass** die galvanische Abscheidung der Katalysatorpartikel in Schritt E) mittels gepulstem Strom erfolgt, wobei der Abscheidestrom 1 bis 30 A pro10 cm² Elektrodenfläche, bevorzugt 5 bis 15 A pro10 cm² Elektrodenfläche beträgt und die Pulsdauer im Bereich von 10 bis 3000 ms, bevorzugt von 500 bis 1500 ms beträgt.

4. Verfahren nach Anspruch 1, **dadurch gekennzeichnet, dass** in den Prozessschritten B), D, E), F), G), H) und I) unabhängig voneinander die jeweiligen Prozessflüssigkeiten: Lösungsmittel, Wasser und Metallsalzlösung die Folie und den Stromkollektors von der Seite der Folie in Richtung des Stromkollektors zwangsweise durchströmen..

5. Verfahren nach einem der Ansprüche 1 bis 4, **dadurch gekennzeichnet, dass** die Abscheidung der Metallpartikel gemäß Schritt H) mittels gepulstem Strom erfolgt, wobei der Abscheidestrom 1 bis 30 A pro10 cm² Elektrodenfläche, bevorzugt 5 bis 15 A pro 10 cm² Elektrodenfläche beträgt und die Pulsdauer im Bereich von 10 bis 3000 ms, bevorzugt von 500 bis 1500 ms beträgt.

6. Verfahren nach einem der Ansprüche 1 bis 5, **dadurch gekennzeichnet, dass** die feinkristallinen metallischen Katalysatorpartikel nach Schritt H) einen mittleren Durchmesser im Bereich von 0,05 µm bis 5 µm und eine mittlere Länge im Bereich von 10 µm bis 700 µm aufweisen.

7. Verfahren nach einem der Ansprüche 1 bis 6, **dadurch gekennzeichnet, dass** das elektrisch leitende, flächige Gebilde als metallisches Netz, Vlies, Schaum, Gewebe, Geflecht, Gewirk oder Streckmetall ausgebildet ist.

8. Verfahren nach einem der Ansprüche 1 bis 7, **dadurch gekennzeichnet, dass** die Metallsalzlösung gemäß Schritt D) eine Salzlösung auf Basis von mindestens einem Metallsalz aus der Reihe: Silbersalz, bevorzugt Silber-Nitrat, Silber-Methansulfonat, Kalium-Silber-Cyanid, Kalium-Silber-Thiosulfat, Silber-Lactat, oder Platinsalz, insbesondere Pt(NO₃)₂ oder H₂PtCl₆ ist.

9. Verfahren nach einem der Ansprüche 1 bis 8, **dadurch gekennzeichnet, dass** die Metallsalzlösung gemäß Schritt G) eine Salzlösung auf Basis von mindestens einem Metallsalz aus der Reihe: Silbersalz, bevorzugt Silber-Nitrat, Silber-Methansulfonat, Kalium-Silber-Cyanid, Kalium-Silber-Thiosulfat, Silber-Lactat, oder Platinsalz, insbesondere Pt(NO₃)₂ oder H₂PtCl₆ ist.

10. Verfahren nach Anspruch 9, **dadurch gekennzeichnet, dass** die Metallsalzlösung eine saure Lösung mit einem pH Wert im Bereich von 1 bis 2 ist, und bevorzugt Phosphorsäure und/oder Salpetersäure enthält.

11. Sauerstoffverzehrelektrode, wenigstens umfassend einen Stromkollektor und eine Gasdiffusionsschicht mit einer katalytisch aktiven Komponente, **dadurch gekennzeichnet, dass** die Gasdiffusionsschicht als poröse Folie eines fluorierten Polymeren, insbesondere als eine poröse Polytetrafluorethylen (PTFE)-Folie ausgebildet ist, in die als katalytisch aktive Komponente feinkristalline metallische Katalysatorpartikel, insbesondere mit einem mittleren Durchmesser im Bereich von 0,05 µm bis 5 µm und einer mittleren Länge im Bereich von 10 µm bis 700 µm, eingebracht sind **dadurch gekennzeichnet, dass** die feinkristallinen metallischen Katalysatorpartikel über eine erste metallische Zwischenschicht mit dem Stromkollektor elektrisch leitend verbunden sind.

12. Sauerstoffverzehrelektrode nach Anspruch 11, **dadurch gekennzeichnet, dass** die erste metallische Zwischenschicht eine Silberschicht ist.

13. Sauerstoffverzehrelektrode nach Anspruch 11 oder 12 erhalten aus einem Verfahren gemäß einem der Ansprüche 1 bis 10.

14. Verwendung der Sauerstoffverzehrelektrode nach einem der Ansprüche 11 bis 13 als Sauerstoff verzehrende Kathode in der Elektrolyse, insbesondere in der Chloralkalielektrolyse, oder als Elektrode in einer alkalischen Brennstoffzelle oder als Elektrode in einer Metall/Luft-Batterie.

15. Elektrolysevorrichtung, insbesondere für die Chloralkalielektrolyse, aufweisend eine Sauerstoffverzehrelektrode nach einem der Ansprüche 11 bis 13 als Sauerstoff verzehrende Kathode.
